# EUROPÄISCHE PATENTANMELDUNG

(11) **EP 2 407 955 A2**
(43) Veröffentlichungstag der Anmeldung: **18.01.2012**
(21) Anmeldenummer: 11005790.8
(22) Anmeldetag: 15.07.2011
(51) Int. Cl.: G09B 15/00

(54) **Klangwürfel**

(30) Priorität: 15.07.2010 DE 202010008089 U
(71) Anmelder: Tenbrink, Manfred, 7091 EE Dinxperlo (NL)
(72) Erfinder: Tenbrink, Manfred, 7091 EE Dinxperlo (NL)
(74) Vertreter: Maxton Langmaack & Partner

(57) **Zusammenfassung**

Es wird eine Anordnung zum Würfeln vorgeschlagen mit mehreren zu einem so genannten Würfel zusammengefassten Flächenabschnitten, dadurch gekennzeichnet, dass der Würfel folgende Komponenten enthält: einen elektrischen Energiespeicher und einen Lagesensor, welcher erfasst, welcher der Flächenabschnitte eine definierte Stellung einnimmt, und dass die Anordnung weiterhin folgende Komponenten enthält:
einen elektronischen Speicher, welcher Daten zur Erzeugung mehrerer verschiedener Töne enthält und welcher Zuordnungsinformationen in der Art enthält, dass ein bestimmter Ton einem bestimmten Flächenabschnitt zugeordnet ist; einen mit dem Lagesensor und dem elektronischen Speicher wirksam verbundenen Prozessor, der in Abhängigkeit von den Daten des Lagesensors und anhand der Zuordnungsinformationen den Ton bestimmt, der einem Flächenabschnitt zugeordnet ist, welcher die bestimmte Stellung einnimmt; Mittel zur Klangerzeugung, die mit dem Prozessor wirksam verbunden sind, derart, dass die Mittel den vom Prozessor bestimmten Ton erzeugen; und eine Anzeige, die den vom Prozessor bestimmten Ton optisch darstellt.

## Beschreibung

Die Neuerung betrifft eine Anordnung zum Würfeln.

Aus der Praxis ist allgemein bekannt, dass ein Würfel mehrere zu einem Körper zusammengefasste Flächenabschnitte aufweist. Ein klassischer Würfel weist sechs ebene Flächen auf. Alternative, seltener verwendete Ausführungen von Würfeln weisen mehr als sechs Flächen auf oder sind als Kugel ausgestaltet, wobei auch diese von der ursprünglichen Würfelform abweichenden Gegenstände im Rahmen des vorliegenden Vorschlages als Würfel bezeichnet werden, denn auch diese Sonderarten von Würfeln sind derart ausgestaltet, dass sie nur in bestimmten, definierten Positionen auf einer ebenen horizontalen Fläche zu liegen kommen und dann auf ihrem nach oben weisenden Flächenabschnitt eine bestimmte Anzeige aufweisen, beispielsweise eine Farbe, eine Punktzahl in Symbolen oder Ziffern geschrieben, oder eine Handlungsanweisung für einen diesen Würfel benutzenden Spieler.

Weiterhin sind aus der Praxis Anordnungen zum Würfeln bekannt, bei denen nicht nur ein einziger Würfel für den weiteren Spielablauf genutzt wird, sondern zwei oder mehrere Würfel, so dass eine dementsprechend große Anzahl an Flächenabschnitten nutzbar ist.

Der Neuerung liegt die Aufgabe zugrunde, eine gattungsgemäße Anordnung zum Würfeln dahingehend zu verbessern, dass mit dieser Anordnung das Musikverständnis bzw. Notenverständnis des Spielers auf spielerische Weise verbessert werden kann.

Diese Aufgabe wird durch eine Anordnung mit den Merkmalen des Anspruchs 1 gelöst.

Die Neuerung schlägt mit anderen Worten vor, den einzelnen Würfelflächen Noten zuzuordnen und diese Noten akustisch darzustellen. Zu diesem Zweck enthält der Würfel einen elektrischen Energiespeicher sowie einen Lagesensor, der erfasst, welcher Flächenabschnitt des Würfels eine definierte Stellung einnimmt, beispielsweise nach unten ausgerichtet ist.

Weiterhin umfasst die vorschlagsgemäße Anordnung einen elektronischen Speicher, der Daten enthält, die zur Erzeugung mehrerer unterschiedlicher Töne dienen und weiterhin enthält der elektronische Speicher Zuordnungsinformationen, so dass einem bestimmten Flächenabschnitt ein bestimmter Ton zugeordnet ist.

Weiterhin enthält die Anordnung einen Prozessor beispielsweise in Form eines Mikrochips, der einerseits mit dem Lagesensor und andererseits mit dem elektronischen Speicher wirksam verbunden ist und an eine elektrische Energieversorgung angeschlossen ist, so dass der Prozessor in Abhängigkeit von den Daten des Lagesensors und mittels der Zuordnungsinformationen den jeweiligen Ton bestimmt, der demjenigen Flächenabschnitt des Würfels zugeordnet ist, der momentan die vorbestimmte Stellung einnimmt.

Weiterhin weist die Anordnung Mittel zur Klangerzeugung auf, die mit dem Prozessor wirksam verbunden sind und beispielsweise von dem Prozessor angesteuert werden können, so dass diese Mittel zur Klangerzeugung den jeweiligen vom Prozessor bestimmten Ton erzeugen. Schließlich weist die Anordnung eine Anzeige auf, die den vom Prozessor bestimmten und von den Mitteln zur Klangerzeugung erzeugten Ton optisch darstellt.

In einer von der Handhabung her möglichst einfachen Ausgestaltung der Anordnung können sämtliche vorbeschriebenen Komponenten im Würfel selbst angeordnet sein, beispielsweise können im Inneren des Würfels der Energiespeicher, der Lagesensor, der elektronische Datenspeicher und der Prozessor angeordnet sein sowie die Mittel zur Klangerzeugung und auf der Außenseite des Würfels können die Anzeigen unterschiedlicher Töne vorgesehen sein, im einfachsten Fall dadurch, dass die einzelnen Flächenabschnitte des Würfels mit den entsprechen Notensymbolen bedruckt sind.

In einer demgegenüber aufwendigeren Ausgestaltung der Anordnung kann vorgesehen sein, dass der Würfel lediglich den elektrischen Energiespeicher und den Lagesensor enthält, sowie einen Sender zur Datenübermittlung, und dass die anderen genannten Komponenten in einer Art Spielfläche o. dgl. angeordnet sind, also außerhalb des Würfels, so dass dort beispielsweise die Datenverarbeitung anhand der vom Lagesensor ermittelten Daten erfolgen, und die Tonausgabe und die optische Anzeige des jeweils vom Prozessor bestimmten Tones erfolgen kann.

Vorteilhaft kann die Anordnung zwölf Flächenabschnitte aufweisen, so dass sämtliche 12 Töne einer Oktave repräsentiert sind und jedem Flächenabschnitt ein bestimmter Ton dieser Oktave zugeordnet ist. Dementsprechend können zwei Würfel mit typischer Würfelform und jeweils sechs Flächen gleichzeitig Verwendung finden, so dass über diese insgesamt 12 Flächenabschnitte der beiden Würfel sämtliche Töne der einen Oktave repräsentiert sind. Alternativ kann ein einziger Würfel vorgesehen sein, der sämtliche 12 Flächenabschnitte ausbildet und dementsprechend als Dodekaeder ausgestaltet ist.

Zudem kann, wenn mehrere Oktaven im Spiel berücksichtigt werden sollen, die Anordnung ein ganzzahliges Mehrfaches von 12 Flächenabschnitten aufweisen, beispielsweise 24 oder 36 Flächenabschnitte, wobei auch diese Ausgestaltung in einem einzigen Würfel oder in mehreren Würfeln mit beispielsweise jeweils 6 oder 12 Flächenabschnitten verwirklicht sein kann.

Vorteilhaft kann der elektronische Speicher beschreibbar ausgestaltet sein, so dass ähnlich wie bei einem Synthesizer die Daten zur Erzeugung der Töne geändert werden können und auf diese Weise entweder ganz andere Töne, beispielsweise einer anderen Oktave, abgespeichert werden können oder die eigentliche Klangfärbung des jeweiligen Tons verändert werden kann, so dass beispielsweise die Töne nach unterschiedlichen Musikinstrumenten klingen können und auf diese Weise, bei an sich gleich bleibenden Ton, der erzeugte Klang durch den Spieler verändert werden kann, indem er die dementsprechend anderen Daten in den elektronischen Speicher einspeichern kann.

Um die Betriebsbereitschaft des Würfels über einen Zeitraum von mehreren Jahren sicherzustellen bzw. immer wieder erneuern zu können, kann der Würfel vorteilhaft zu öffnen sein, so dass der elektrische Energiespeicher aus dem Würfel entnommen und ausgetauscht oder aufgeladen werden kann. Alternativ dazu kann vorgesehen sein, dass der elektrische Energiespeicher induktiv aufgeladen werden kann, und dass die Anordnung eine dazu komplementäre induktive Ladestation aufweist, so dass der Energiespeicher, ohne aus dem Würfel entnommen zu sein, in der Ladestation aufgeladen werden kann.

Wenn die Anzeige des jeweils bestimmten Tons auf dem Würfel selbst vorgesehen ist, kann diese vorzugsweise auf dem jeweils nach oben weisenden Flächenabschnitt des Würfels angeordnet sein. Wenn der Lagesensor die unten liegende Fläche als diejenige Fläche erfasst, die eine bestimmte vorgegebene Position eingenommen hat, liegt also die Anzeige des Tons, der dieser bestimmten Fläche zugeordnet ist, auf der der Fläche selbst gegenüberliegenden Seite des Würfels.

Alternativ dazu kann die Anzeige außerhalb des Würfels vorgesehen sein, wie weiter oben erwähnt, so dass in diesem Fall die Möglichkeit besteht, die Anzeige energieaufwendiger auszugestalten, da der im Würfel integrierte Energiespeicher durch die Anzeige nicht belastet wird. So kann beispielsweise eine beleuchtete Anzeige außerhalb des Würfels vorgesehen sein und dies hat beispielsweise den Vorteil, dass unabhängig von der Blickrichtung des Spielers oder mehrerer Mitspieler auf den Würfel die Anzeige für alle Mitspieler vergleichsweise einfach und korrekt zu erkennen ist. Auch die Klangerzeugung außerhalb des Würfels selbst ist insofern vorteilhaft, als Mittel zur Klangerzeugung verwendet werden können, die mehr Energie verbrauchen als beispielsweise ein Piezoschwinger, der in den Würfel selbst integriert sein könnte, so dass außerhalb des Würfels klarere oder voluminösere Klänge erzeugt werden können, wobei insbesondere die Darstellung der Klangfarbe mit einer hohen Wiedergabetreue erfolgen kann, so dass beispielsweise die oben angesprochenen unterschiedlichen Musikinstrumente klar akustisch unterschieden werden können, wenn beispielsweise entsprechend hochwertige Lautsprecher als Mittel zur Klangerzeugung verwendet werden.

Alternativ zu der Anzeige des bestimmten Tons in Form einer Note kann vorgesehen sein, diesen bestimmten Ton alphanumerisch darzustellen, ggf. zusätzlich zu dem Notensymbol, so dass auf diese Weise das Notenverständnis besonders intensiv gefördert wird.

Mit der vorschlagsgemäßen Anordnung können unterschiedlichste Spielvarianten verwirklicht werden und unterschiedlichste Spielregeln aufgestellt werden. Beispielsweise können nacheinander oder durch das gleichzeitige Benutzen von zwei oder mehr Würfeln mehrere Töne "geworfen" bzw. "gewürfelt" werden, wobei dann anschließend diese Töne entweder gleichzeitig wiedergegeben werden können, also beispielsweise als Akkord von drei Tönen, oder diese zuvor bestimmten Töne können in einer zeitlichen Abfolge abgespielt werden, also eine kleine Melodie ergeben. Dazu kann die Anordnung vorzugsweise einen Zwischenspeicher aufweisen, der die zuvor bestimmten Töne bzw. die zu ihrer Erzeugung erforderlichen Daten zwischenspeichert.

## Patentansprüche

1. Anordnung zum Würfeln, mit mehreren zu einem so genannten Würfel zusammengefassten Flächenabschnitten, **dadurch gekennzeichnet, dass** der Würfel folgende Komponenten enthält: einen elektrischen Energiespeicher und einen Lagesensor, welcher erfasst, welcher der Flächenabschnitte eine definierte Stellung einnimmt, und dass die Anordnung weiterhin folgende Komponenten enthält:
einen elektronischen Speicher, welcher Daten zur Erzeugung mehrerer verschiedener Töne enthält und welcher Zuordnungsinformationen in der Art enthält, dass ein bestimmter Ton einem bestimmten Flächenabschnitt zugeordnet ist; einen mit dem Lagesensor und dem elektronischen Speicher wirksam verbundenen Prozessor, der in Abhängigkeit von den Daten des Lagesensors und anhand der Zuordnungsinformationen den Ton bestimmt, der einem Flächenabschnitt zugeordnet ist, welcher die bestimmte Stellung einnimmt; Mittel zur Klangerzeugung, die mit dem Prozessor wirksam verbunden sind, derart, dass die Mittel den vom Prozessor bestimmten Ton erzeugen; und eine Anzeige, die den vom Prozessor bestimmten Ton optisch darstellt.

2. Anordnung nach Anspruch 1, **dadurch gekennzeichnet, dass** die Anordnung 12 Flächenabschnitte aufweist, denen die 12 Töne einer Oktave zugeordnet sind.

3. Anordnung nach Anspruch 2, **dadurch gekennzeichnet, dass** die Anordnung ein ganzzahliges Mehrfaches von 12 Flächenabschnitten aufweist, und dass den Flächenabschnitten die Töne entsprechend vieler Oktaven zugeordnet sind.

4. Anordnung nach einem der vorhergehenden Ansprüche, **dadurch gekennzeichnet, dass** ein einziger Würfel sämtliche Flächenabschnitte ausbildet.

5. Anordnung nach einem der Ansprüche 1 bis 3, **dadurch gekennzeichnet, dass** wenigstens zwei Würfel vorgesehen sind, die jeweils wenigstens 6 Flächenabschnitte aufweisen.

6. Anordnung nach einem der vorhergehenden Ansprüche, **dadurch gekennzeichnet, dass** der elektronische Speicher beschreibbar ist, derart, dass die Daten zur Erzeugung der Töne änderbar sind.

7. Anordnung nach einem der vorhergehenden Ansprüche, **dadurch gekennzeichnet, dass** die Mittel zur Klangerzeugung in den Würfel integriert sind.

8. Anordnung nach einem der Ansprüche 1 bis 6, **dadurch gekennzeichnet, dass** der Würfel einen Sender zur drahtlosen Datenübertragung aufweist, und dass die Mittel zur Klangerzeugung außerhalb des Würfels vorgesehen und mit einem Empfänger für die vom Würfel gesendeten Daten verbunden sind.

9. Anordnung nach einem der vorhergehenden Ansprüche, **dadurch gekennzeichnet, dass** der Würfel zu öffnen und der elektrische Energiespeicher aus dem Würfel entnehmbar ist.

10. Anordnung nach einem der vorhergehenden Ansprüche, **dadurch gekennzeichnet, dass** der elektrische Energiespeicher mit elektrischer Energie wiederaufladbar ausgestaltet ist.

11. Anordnung nach Anspruch 10, **dadurch gekennzeichnet, dass** der elektrische Energiespeicher induktiv aufladbar ist und eine dem Energiespeicher zugeordnete induktive Ladestation vorgesehen ist.

12. Anordnung nach einem der vorhergehenden Ansprüche, **dadurch gekennzeichnet, dass** die Anzeige, welche die den vom Prozessor bestimmten Ton optisch darstellt, auf dem Würfel selbst vorgesehen ist und auf dem jeweils nach oben weisenden Flächenabschnitt angeordnet ist.

13. Anordnung nach einem der vorhergehenden Ansprüche, **dadurch gekennzeichnet, dass** der Würfel einen Sender zur drahtlosen Datenübertragung aufweist, und dass die Anzeige, welche die den vom Prozessor bestimmten Ton optisch darstellt, außerhalb des Würfels vorgesehen und mit einem Empfänger für die vom Würfel gesendeten Daten verbunden ist.

14. Anordnung nach Anspruch 12 oder 13, **dadurch gekennzeichnet, dass** die Anzeige den jeweiligen Ton alphanumerisch darstellt.

15. Anordnung nach Anspruch 12 oder 13, **dadurch gekennzeichnet, dass** die Anzeige den jeweiligen Ton in Form einer Note darstellt.

16. Anordnung nach einem der vorhergehenden Ansprüche, **dadurch gekennzeichnet, dass** die Mittel zur Klangerzeugung mit einem Zwischenspeicher wirksam verbunden sind, derart, dass mehrere zuvor bestimmte Töne zwischenspeicherbar sind und anschließend zeitgleich als Akkord oder in einer Klangfolge als Melodie abspielbar sind.
